# EUROPEAN PATENT SPECIFICATION

(11) **EP 1 609 645 B1**
(45) Date of publication and mention of the grant of the patent: **29.07.2009**
(21) Application number: 05013140.8
(22) Date of filing: 17.06.2005
(51) Int. Cl.: B60H 3/00, B60H 1/34

(54) **Dust reducing apparatus for vehicle**
Staubreduzierende Einrichtung für ein Fahrzeug
Appareil de réduction de poussière pour véhicule

(30) Priority: 21.06.2004 JP 2004182226
(43) Date of publication of application: 28.12.2005
(73) Proprietor: Toyota Jidosha Kabushiki Kaisha, Toyota-shi, Aichi-ken, 471-8571 (JP)
(72) Inventor: Takeda, Hironobu, Toyota-shi Aichi-ken 471-8571 (JP); Kato, Yasushi, Toyota-shi Aichi-ken 471-8571 (JP)
(74) Representative: Winter, Brandl, Fürniss, Hübner Röss, Kaiser, Polte Partnerschaft Patent- und Rechtsanwaltskanzlei

(56) References cited:
- FR-A- 2 838 379
- US-A1- 2003 147 783

## Description

### BACKGROUND OF THE INVENTION

### Field of the Invention

The present invention relates to a dust reducing apparatus for reducing an amount of dust and the like such as pollen in a passenger compartment of a vehicle such as an automobile.

### Description of the Related Art

In recent years, patients suffering from pollinosis are increasing. As measures against the pollinosis, a vehicular air conditioning system for preventing pollen from entering into a passenger compartment of an automobile has been devised (see JP 8-310230 A for example). In such a vehicular air conditioning system, a downstream portion of an outside air introducing port in a duct of the air conditioning system is divided into a first and second intake passages, and a pollen eliminating filter is disposed in the second intake passage. The duct of the air conditioning system is provided therein with an outside air change-over door for selectively introducing outside air suctioned from an outside air introducing port into the first intake passage or the second intake passage.

In a season when pollen which is materials causing pollinosis are scattered in fine or cloudy weather, the outside air change-over door is controlled such that the door is positioned at a location where outside air is introduced by a pollen eliminating filter based on signals from a raindrop detection sensor and a magnetic detection sensor. With this operation, outside air suctioned from the outside air introducing port of the vehicular air conditioning system passes through the pollen eliminating filter. Thus, clean air from which pollen in the outside air is eliminated is sent into the passenger compartment, and the amount of pollen in the passenger compartment is reduced.

In the JP 8-310230 A, a vehicular air conditioning system in which another pollen eliminating filter is disposed downstream of an inside air introducing port of the duct of the air conditioning system is described in addition to the above structure. With this structure, it is described that not only pollen included in the outside air, but also pollen included in the inside air can also effectively be captured (eliminated).

In the automobile to which the conventional vehicular air conditioning system is applied, however, even if the inside air introducing port includes the pollen eliminating filter, pollen in the passenger compartment can not be eliminated within a short time. Concretely, the air conditioning system (automatic air conditioner) is usually controlled in a warm-up control manner. Thus, in the seasons, for example February to May, during which cryptomeria pollen and the like which is allergens for many of pollinosis patients are scattered, the air conditioning system is not operated until the temperature of heater core, i.e., the temperature of engine water rises. Pollen which entered in the passenger compartment during driving of the vehicle will not be captured until the air conditioning system is activated, and the pollen will keep scattering and floating in the passenger compartment until then.

Further, although most of pollen naturally drop on a floor of the passenger compartment, the conventional vehicular air conditioning system can not capture the pollen on the floor. In a heating mode used in the cryptomeria pollen scattering season, since the heating air is particularly sent from feet area, the pollen on the floor will be caught up by the wind in the passenger compartment. Pollen attached to a baggage or clothes brought into the passenger compartment can not easily be eliminated by the air circulated by the air conditioning system.

Other systems for reducing dust within a passenger compartment of a vehicle are known from FR 2838379 A, US 2003/0147783 A1 or FR 2799415 A1. A vehicle having a dust reducing apparatus in accordance with the preambles of claims 1, 6, and 9 is known from S121181 A.

### SUMMARY OF THE INVENTION

The object underlying the present invention is to provide a vehicle having a dust reducing apparatus capable of reliably eliminating dust and the like such as pollen existing in a passenger compartment within a short time.

This object is solved by a vehicle in accordnace with claim 1, 6, or 9.

According to claim 1, after a passenger gets into the vehicle for example, the air cleaning apparatus is operated automatically or by means of manual operation of a switch. The air cleaning apparatus suctions air in the passenger compartment and causes the air to pass through the filter, and clean air from which dust such as pollen has been eliminated is discharged into the passenger compartment. That is, dust is captured by the filter. As a result, the amount of dust in the passenger compartment is reduced.

Since the air cleaning apparatus is provided independently from the air conditioning system of the vehicle, the operation starting timing is not limited. Therefore, the air cleaning apparatus can be operated immediately after the passenger gets into the vehicle. Thus, even if dust enters into the passenger compartment together with the passenger getting into the vehicle, the dust can swiftly be eliminated by the air cleaning apparatus. Since the air cleaning apparatus suctions air from the lower portion in the passenger compartment, it is possible to reliably eliminate dust that is naturally dropping and dust caught up by the air conditioning air (heating air) inside the passenger compartment.

Thus, according to the dust reducing apparatus of the first aspect, dust such as pollen existing in the passenger compartment can reliably be eliminated within a short time.

The dust reducing apparatus includes a control unit which operates the air cleaning apparatus for a predetermined period after the door opening of the vehicle is closed.

For example, if the door opening which was opened when the passenger got into the vehicle is closed, the control unit detects this fact and starts operation of the air cleaning apparatus. Since the air cleaning apparatus is operated immediately after the door opening is closed after the passenger got into the vehicle, dust can be eliminated within a short time after the passenger getting into the vehicle. This predetermined period may be a period until a set time has elapsed after the door opening is closed, or may be a period until a signal indicating that the dust amount is equal to or smaller than a predetermined value is input from a dust sensor, or may be a period until a signal indicating that the passenger has operated a stop switch is input.

In the dust reducing apparatus, the air cleaning apparatus can be disposed in a seat in the passenger compartment or below the seat.

By disposing the air cleaning apparatus in the seat or below the seat, the dust reducing apparatus can be provided effectively utilizing the space in the passenger compartment. The body of the air cleaning apparatus and the suction unit which suctions air from the lower position in the passenger compartment can be disposed close to each other (or provided integrally), such that a pressure loss caused by the suction can be reduced, and the air suction ability of the air cleaning apparatus can sufficiently be exhibited.

The dust reducing apparatus may further include a blower which is disposed in an upper portion of the seat or above the seat in the passenger compartment, and which generates an air flow flowing toward the air cleaning apparatus which is disposed in a lower portion of the seat or at a lower position in the passenger compartment.

According to this structure, the blower disposed in the upper portion of the seat (i.e., at an upper portion of a passenger) in the passenger compartment or above the seat sends air downward, and generates the air flow flowing toward the air cleaning apparatus along the passenger on the seat. With this structure, it is possible to effectively eliminate dust attached to clothes of the passenger and dust around the passenger. It is sufficient for this air cleaning apparatus that the air suction unit is disposed in the lower portion of a seat or below a seat (the seat need not be the same as the seat in which the air cleaning apparatus is disposed).

According to claim 6, the ion generator emits ions into the passenger compartment so that dust floating or scattered in the air in the passenger compartment is positively or negatively charged. At this time, when the member to which dust attaches (dust attracting member, hereinafter) is charged with opposite polarity as that of the dust, the dust is thereby attached to the dust attracting member. Thus, it is possible to move the dust in the passenger compartment and to capture the dust without forcibly generating the air flow. With this apparatus, it is possible to capture the dust swiftly and to reduce the amount of dust in the passenger compartment without causing all of the air in the passenger compartment to pass through the filter unlike in the structure in which the dust is captured using the filter.

Since the dust reducing apparatus is provided independently from the air conditioning system of the vehicle, the operation starting timing is not limited. Therefore, the dust reducing apparatus can be operated immediately after the passenger gets into the vehicle. Thus, even if dust enters into the passenger compartment together with the passenger getting into the vehicle, the dust attracting member can capture the dust and swiftly eliminate the dust.

According to this dust reducing apparatus, dust such as pollen existing in the passenger compartment can reliably be eliminated within a short time. The dust attracting member may be, for example, a sunshade or the like which is mounted on an inner surface of a window, or supported on a vehicle body and located inside of the window. With this structure, since an existing part of the vehicle is utilized, it is possible to prevent the number of parts from increasing.

In the dust reducing apparatus, the dust attracting member can be selectively positioned at a dust attaching position in the passenger compartment where the dust can attach to the member, and at a housed position where the dust attracting member is housed in a housing unit provided in the passenger compartment.

With this structure, when the dust attracting member is positioned at the dust attaching position where the member is projecting from the housed position into the passenger compartment, the dust attracting member is charged and causes dust to attach thereto, and when the dust attracting member is positioned at the housed position where the dust attracting member is accommodated in the housing unit, the dust attracting member is de-electrified and the dust can be collected. By collecting the dust in the housing unit, which is isolated from the passenger compartment, it is possible to prevent or suppress the dust from being scattered in the passenger compartment again.

According to claim 9, dust attached to a carry-on article such as a bag or jacket carried into the passenger compartment is separated from the carry-on article by the separating unit, and the capture unit captures the dust separated from the carry-on article. Thus, dust attached to the carry-on article is reliably eliminated and the amount of dust in the passenger compartment is reduced. Especially since dust will be naturally removed from the carry-on article, it is possible to prevent dust floating or scattered in the passenger compartment from increasing.

Since the dust reducing apparatus is provided independently from the air conditioning system of the vehicle, the timing of starting operation is not limited. Therefore, the dust reducing apparatus can start operation immediately after the passenger gets into the vehicle for example. Thus, even if dust enters into the passenger compartment by being attached on to carry-on article(s) carried into the passenger compartment at the time when a passenger gets into the vehicle, it can swiftly be eliminated.

In the dust reducing apparatus, it is possible to reliably eliminate dust such as pollen existing in the passenger compartment within a short time. An example of the capture unit is an air cleaning apparatus which suctions air and allows the air to pass through a filter to eliminate dust in the air, or a combination of an ion generator which charges dust and a dust attracting member to which the charged dust attaches.

The dust reducing apparatus may further include an accommodating space which is in communication with the capture unit and which accommodates the carry-on article therein, and the separating unit may be provided so as to separate the dust from the carry-on article accommodated in the accommodating space.

According to this structure, the separating unit separates dust which is attached to the carry-on article in a state in which the carry-on article is accommodated in the accommodating space, and the capture unit which is in communication with the accommodating space captures the dust. Thus, dust attached to the carry-on article(s) is prevented from being scattered in the passenger compartment when the dust is separated from the carry-on article by the separating unit.

In the dust reducing apparatus, the separating unit may include an air nozzle which ejects compressed air into the accommodating space.

According to this structure, after the carry-on article is accommodated in the accommodating space, compressed air is ejected from the air nozzle, and dust attached to the carry-on article is effectively separated from the carry-on article by this compressed air. By accommodating the carry-on article in the accommodating space, dust can be effectively separated from the carry-on article using the compressed air.

In the dust reducing apparatus, the separating unit may include a vibrator which vibrates the carry-on article.

According to this structure, the vibrator is incorporated in a member on which a carry-on article is supported or hung in the passenger compartment (e.g., an assist grip or the like on which a hanger can be hung), and when a carry-on article is brought into the passenger compartment, the carry-on article is vibrated. As a result, dust attached to the carry-on article is shaken off, and captured by the capture unit. This structure is especially suitable to separate and capture dust which has relatively great specific gravity and which naturally drops such as pollen.

As described above, the dust reducing apparatus of the present invention has the excellent effect that dust and the like such as pollen existing in a passenger compartment can reliably be eliminated within a short time.

### BRIEF DESCRIPTION OF THE DRAWINGS

Embodiment of the present invention will be described in detail based on the following figures, wherein:
Fig. 1 is a perspective view showing an inside of a passenger compartment to which a pollen removing apparatus (dust reducing apparatus) of a first embodiment of the invention is applied;
Fig. 2 is a schematic view of the pollen eliminating apparatus of the first embodiment;
Fig. 3 is a perspective view showing an inside of a passenger compartment to which a pollen eliminating apparatus of a second embodiment of the invention is applied;
Figs. 4A and 4B show a pollen eliminating apparatus of a third embodiment of the invention, wherein Fig. 4A is a schematic view showing a state in which pollen is captured, and Fig. 4B is a schematic view showing a state in which the pollen is collected;
Fig. 5 is a perspective view showing a layout of a minus ion generator constituting a pollen eliminating apparatus of a third embodiment;
Fig. 6 is a perspective view showing a layout of a sunshade constituting the pollen eliminating apparatus of the third embodiment;
Fig. 7 is a perspective view showing an inside of a passenger compartment to which a pollen eliminating apparatus of a fourth embodiment of the invention is applied;
Fig. 8 is a schematic view showing a pollen eliminating apparatus of a fifth embodiment of the invention;
Fig. 9 is a perspective view showing a layout of a glass case constituting the pollen eliminating apparatus of the fifth embodiment; and
Fig. 10 is a perspective view showing an inside of a passenger compartment to which a pollen eliminating apparatus of a sixth embodiment of the invention is applied.

### DETAILED DESCRIPTION OF THE INVENTION

### First Embodiment

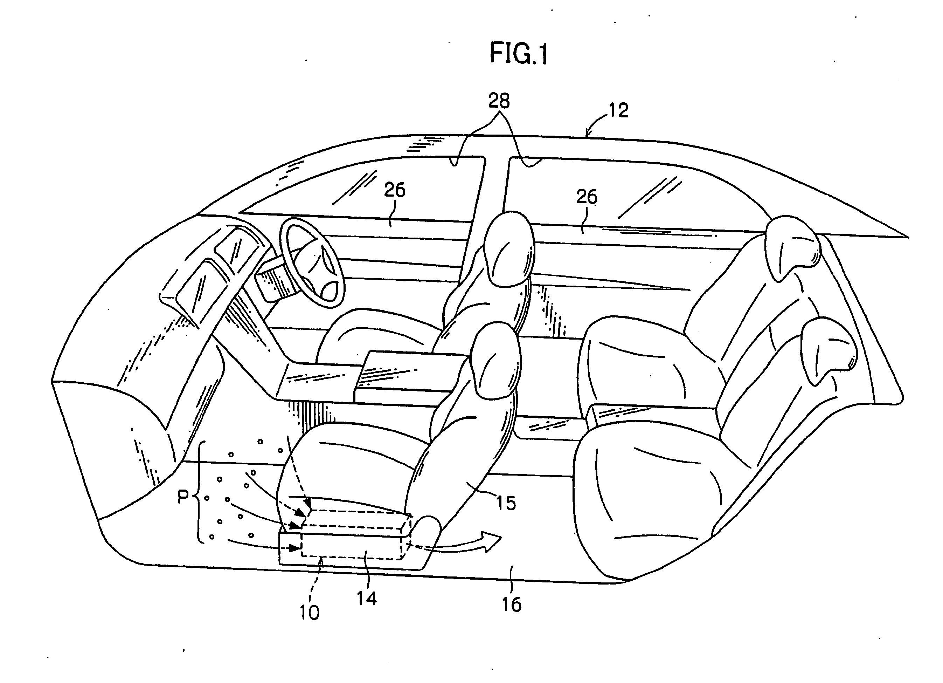

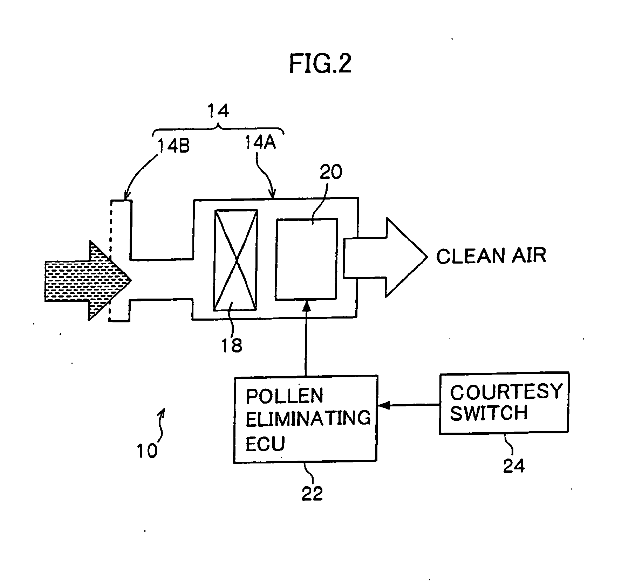

An example in which a pollen eliminating apparatus 10 as a dust reducing apparatus of a first embodiment of the present invention is applied to an automobile 12 as a vehicle will be described based on Figs. 1 and 2.

Fig. 1 is a perspective view showing an inside of a passenger compartment of the automobile 12. As shown in Fig. 1, an air cleaning apparatus 14 is provided in the passenger compartment of the automobile 12. In the first embodiment, the air cleaning apparatus 14 is disposed on a floor 16 under a passenger seat 15 (seat next to the driver). As shown in Fig. 2, the air cleaning apparatus 14 includes a body 14A and a suction unit 14B which are in communication with each other. A pollen eliminating filter 18 and a fan 20 are disposed in the body 14A.

The air cleaning apparatus 14 is designed such that, when the fan 20 is operated, the air cleaning apparatus 14 suctions air from the suction unit 14B, and discharges this air from the body 14A through a pollen eliminating filter 18. That is, the air cleaning apparatus 14 causes pollen P in the air suctioned from the suction unit 14B to be adsorbed by the pollen eliminating filter 18, and sends the air from which the pollen P has been eliminated into the passenger compartment as clean air.

The air cleaning apparatus 14 (fan 20) is controlled by a pollen eliminating ECU (Electronic Control Unit) 22, that is a control unit of the present invention, to be operated under a predetermined condition. In the first embodiment, the pollen eliminating ECU 22 is electrically connected to a courtesy switch 24. The courtesy switch 24 outputs signals (which may be an ON/OFF signal) corresponding to opening and closing states of a door opening 28 of a door 26 (see Fig. 1). The courtesy switch 24 is used for lighting a passenger compartment lamp when the door 26 is operated.

The pollen eliminating ECU 22 operates the fan 20 for a predetermined period on the basis of a signal indicating the closed state of the door opening 28 (hereinafter referred to as a closing signal) is input from the courtesy switch 24. This predetermined period may be a period between the instant when the closing signal counted by a timer incorporated in the pollen eliminating ECU 22 is input and the instant when a set time has elapsed, or may be a period until a pollen sensor (not shown) outputs a signal indicating that an amount (density) of pollen in the passenger compartment has become equal to or smaller than a set value. Instead of, or in addition to operating the air cleaning apparatus automatically after the door opening 28 is closed, the pollen eliminating ECU 22 may operate the fan 20 based on a detection of a manual operation of a pollen eliminating switch provided on an operation panel of the air conditioning system, for example.

Next, the operation of the first embodiment will be described.

According to the automobile 12 to which the pollen eliminating apparatus 10 having the above-described structure is applied, when the door opening 28 which was opened for a driver or a passenger to get into the automobile is closed by the door 26, a closing signal is inputted from the courtesy switch 24 to the pollen eliminating ECU 22. The pollen eliminating ECU 22 to which the closing signal is inputted operates the fan 20 for the predetermined period. As a result, air in the passenger compartment is suctioned from the suction unit 14B of the air cleaning apparatus 14, so that air including pollen which entered into the passenger compartment when the driver or passenger got into the automobile passes through the pollen eliminating filter 18 and is discharged from the body 14A as clean air.

The air cleaning apparatus 14 is provided independently from the air conditioning system of the automobile 12. Therefore, unlike in the air conditioning system having the conventional pollen eliminating filter, the air cleaning apparatus can be operated at a desired timing without waiting until the engine water temperature rises. In the first embodiment, the pollen eliminating apparatus 10 can operate the air cleaning apparatus 14 immediately after the door opening 28 is closed (simultaneously with the closing of the door opening28), and can eliminate the pollen P within a short time after the driver or passenger gets into the vehicle. Further, since the pollen eliminating ECU 22 is configured to automatically activate the air cleaning apparatus 14, the air cleaning apparatus starts operation reliably and swiftly after the door opening 28 is closed.

The air cleaning apparatus 14, especially the suction unit 14B, is disposed on the floor 16, so that air is suctioned from a lower position in the passenger compartment. Thus, pollen P which naturally dropped on the floor 16 and pollen P which is caught up by the air blown out from the heater at the feet areas can swiftly be eliminated. Especially, since the body 14A of the air cleaning apparatus 14 is also disposed on the floor 16, the body 14A and the suction unit 14B of the air cleaning apparatus 14 can be disposed adjacent to each other. Therefore, pressure loss of the air suction is reduced, and the air suction ability of the air cleaning apparatus 14 can sufficiently be exhibited. Further, since the air cleaning apparatus 14 is disposed below the passenger seat 15, the pollen eliminating apparatus 10 can be provided while effectively utilizing the space in the passenger compartment.

According to the pollen eliminating apparatus 10 of the first embodiment, pollen P existing in the passenger compartment of the automobile 12 can reliably be eliminated within a short time.

Although the air cleaning apparatus 14 is controlled by the pollen eliminating ECU 22 in the first embodiment, the invention is not limited to this structure. Alternatively, the air cleaning apparatus 14 may be operated only by manual operation.

Further, although only one air cleaning apparatus 14 is disposed under the passenger seat 15 in the first embodiment, the invention is not limited to this structure only. For example, the air cleaning apparatus 14 may be disposed under the driver's seat, the back seat, or below the floor 16, or plural air cleaning apparatuses 14 may be provided and disposed at a distance from each other. Furthermore, one air cleaning apparatus 14 may have plural suction units 14B. The invention is not limited to the structure in which the entire air cleaning apparatus 14 is disposed on the floor 16 as long as air is suctioned from a lower position in the passenger compartment.

### Other embodiments

Next, other embodiments of the invention will be described. Elements and portions identical to those of the first embodiment are indicated with the same reference numerals, and explanation thereof will be omitted.

### Second Embodiment

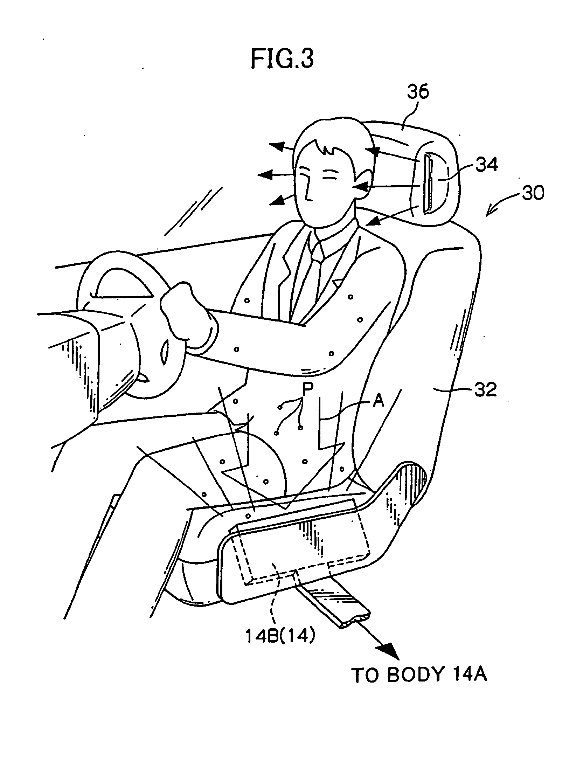

A pollen eliminating apparatus 30 as a dust reducing apparatus of a second embodiment of the invention will be described based on Fig. 3.

As shown in Fig. 3, a pollen eliminating apparatus 30 includes the air cleaning apparatus 14. The suction unit 14B of the air cleaning apparatus 14 is disposed on one side of a driver's seat 32 so that the suction unit 14B suctions air from relatively upper position of the body of the air cleaning apparatus 14. The body 14A (not shown) is disposed below the passenger seat 15 as similar as the first embodiment. In the second embodiment, in addition to the suction unit 14B shown in Fig. 3, the air cleaning apparatus 14 also includes another suction unit 14B (not shown) which is suitable for suctioning pollen P on the floor 16 or pollen P caught up by the wind from the floor 16.

The pollen eliminating apparatus 30 includes blowers 34 provided at upper portions in the passenger compartment of the automobile 12. In the second embodiment, at least an outlet of each of the blower 34 is provided at a head rest 36 constituting an upper position of the driver's seat 32, and air issues forward and downward. With this configuration, when both the blowers 34 and air cleaning apparatus 14 are operated, an air flow from the blowers 34 toward the suction unit 14B of the air cleaning apparatus 14 is generated as shown with the arrow A.

The pollen eliminating apparatus 30 is controlled by the pollen eliminating ECU 22 (not shown in Fig. 3). In the second embodiment, when the closing signal is input to the pollen eliminating ECU 22 from the courtesy switch 24 for the door opening 28 through which the driver gets into the automobile 12, the air cleaning apparatus 14 and the blowers 34 are operated for a predetermined period. When a closing signal is input to the pollen eliminating ECU 22 from a courtesy switch 24 of another door opening 28 through which a passenger gets into a seat other than the driver's seat, only the air cleaning apparatus 14 (or the air cleaning apparatus 14 and other blowers 34 provided at the corresponding seat) is operated for the predetermined period. In addition of operating the air cleaning apparatus automatically after the door opening 28 is closed, the pollen eliminating ECU 22 may operate the air cleaning apparatus 14 and the blowers 34 on the basis of a detection of manual operation of the pollen eliminating switch provided on the operation panel of the air conditioning system.

Next, the operation of the second embodiment will be described.

In the automobile 12 having the pollen eliminating apparatus 30 of the above-described structure, when the door opening 28 for the driver's seat is closed with the door 26, the closing signal is inputted to the pollen eliminating ECU 22 from the courtesy switch 24 corresponding to the closed door opening 28. The pollen eliminating ECU 22 to which the closing signal is input operates the fan 20 and the blowers 34 for the predetermined period.

Then, an air flow from the blowers 34 toward substantially downward (direction toward the suction unit 14B) along the driver is suctioned into the suction unit 14B of the air cleaning apparatus 14 together with pollen P which is floating around the driver and attached to the clothes and body of the driver. Thus, pollen P which entered into the passenger compartment together with the driver attaches to the pollen eliminating filter 18 and eliminated from the air, and clean air is discharged from the body 14A of the air cleaning apparatus 14.

According to the pollen eliminating apparatus 30 of the second embodiment, pollen P existing in the passenger compartment of the automobile 12 can reliably be eliminated within a short time. Further, air blows off pollen P in front of a face of the driver by the operation of the blowers 34, and it is possible to prevent the driver from breathing in the pollen P. In addition, the pollen eliminating apparatus 30 also includes another suction unit 14B for the floor 16 other than the suction unit 14B for the driver's seat 32. Therefore, the pollen eliminating apparatus 30 also exhibits the same effect as that of the pollen eliminating apparatus 10 of the first embodiment (including the effect of flexible operation timing).

Although the driver's seat 32 is provided with the blowers 34 in the second embodiment exemplary, the invention is not limited to this structure. For example, one or all of the passenger seat 15 and back seats may be provided with the blowers 34, instead of the driver's seat 32, or together with the driver's seat. The blower 34 is not limited to be provided at the headrest 36, and may be provided on a roof.

Further, although the air cleaning apparatus 14 is described to have the plural suction units 14B in the second embodiment, the invention is not limited to this structure. For example, the suction unit 14B on the floor 16 may also combine a function for suctioning air from the blower 34, or the air cleaning apparatus 14 may configured not to have a suction unit 14B which suctions air in the vicinity of the floor 16. If the air cleaning apparatus 14 has both the suction unit 14B for the driver's seat 32 and the suction unit 14B for the floor 16, the operation of the air cleaning apparatus 14 may be completed after the operation of the blower 34 is completed (the suction unit 14B may have the function for occasionally suctioning air only in the vicinity of the floor 16).

Furthermore, although the air cleaning apparatus 14 and the blower 34 are controlled by the pollen eliminating ECU 22 in the second embodiment, the invention is not limited to this structure. For example, the air cleaning apparatus 14 and the blower 34 may be operated only manually in association with each other or independently from each other.

### Third Embodiment

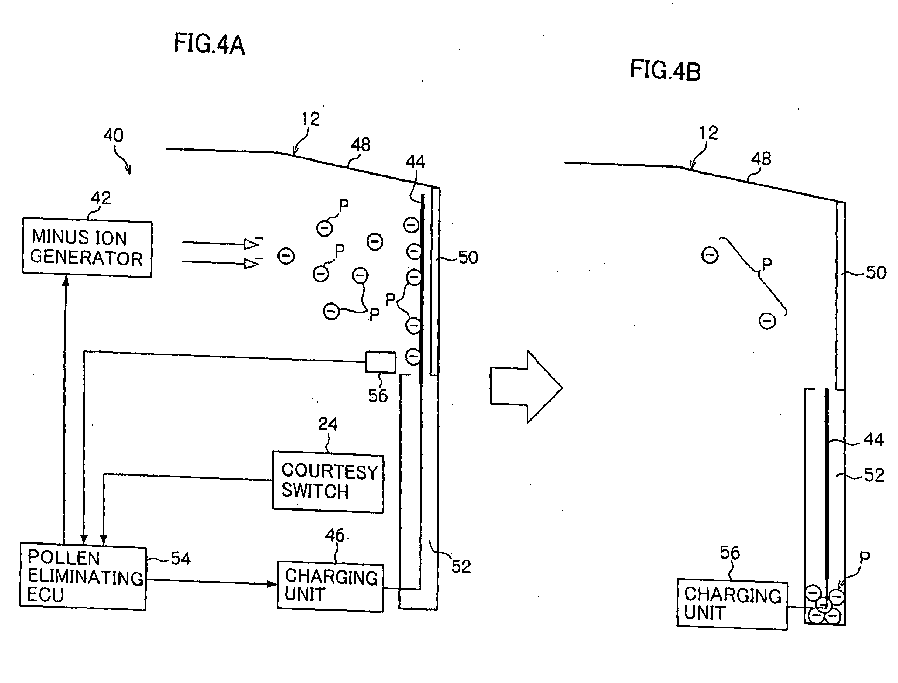

A pollen eliminating apparatus 40 as a dust reducing apparatus according to a third embodiment of the invention will be described based on Figs. 4 to 6.

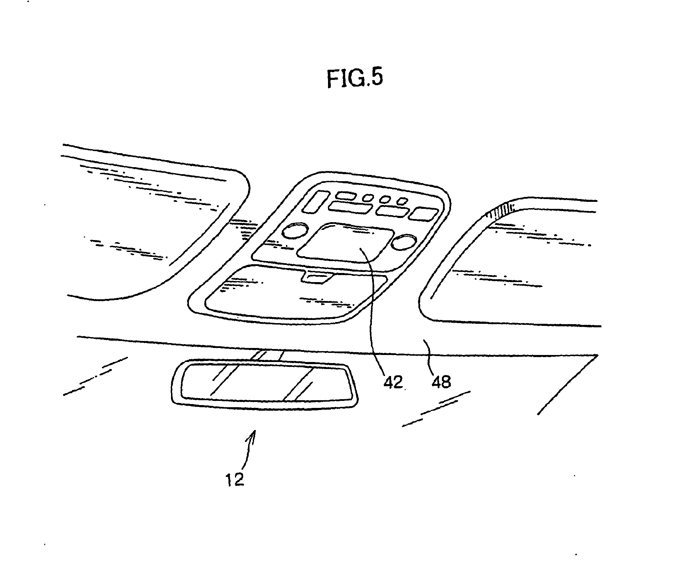

As shown in Fig. 4A, the pollen eliminating apparatus 40 includes a minus ion generator 42 as an ion generator. The minus ion generator 42 is configured to eject minus ions (electrons) into the passenger compartment when it is operated, and negatively charges pollen P floating or scattered in the air in the passenger compartment. As shown in Fig. 5, the minus ion generator 42 (especially a minus ion ejecting portion) is disposed at a central portion of a front end of an inner surface of a roof 48.

The pollen eliminating apparatus 40 further includes a charging unit 46 capable of positively charging a sunshade 44 as a dust attracting member. The charging unit 46 selectively generates a charged state in which the sunshade 44 is positively charged, and a de-electrified state in which this charged state is released. In the third embodiment, the charging unit 46 is configured to switch between a state in which a positive pole of a battery is connected to the sunshade 44 comprising a conductive material, and a state in which the sunshade 44 is grounded. In the state in which the sunshade 44 is positively charged, the sunshade 44 attracts and captures negatively charged pollen P.

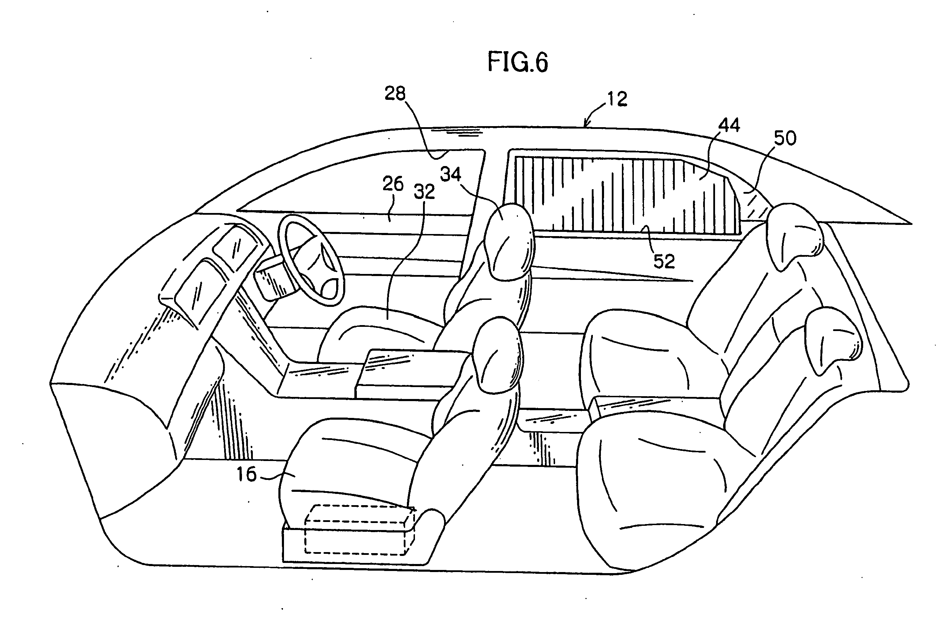

As shown in Fig. 6, the sunshade 44 is a constituent member of the automobile 12 which is located inside of a side window 50 and which functions as a light shielding member. Referring back to Fig. 4A, the automobile 12 is provided with a sunshade housing 52 capable of accommodating the sunshade 44. The sunshade 44 can be selectively move between a light shielding position where the sunshade 44 projects from the sunshade housing 52 and is located inside of the side window 50 (in the passenger compartment), and a housed position where the sunshade 44 is accommodated in the sunshade housing 52 as shown in Fig. 4B. The sunshade 44 is not limited to the structure in which the sunshade 44 slides between the light shielding position and the housed position. For example, the sunshade 44 may be configured so as to wound up at the housed position in the sunshade housing 52.

In the pollen eliminating apparatus 40, the minus ion generator 42 and the charging unit 46 are controlled by a pollen eliminating ECU 54. In the third embodiment, the pollen eliminating ECU 54 is electrically connected to the courtesy switch 24 and a limit switch 56. The limit switch 56 outputs a light shielding position signal (ON signal for example) when the sunshade 44 is positioned at the light shielding position, and outputs a housed position signal (OFF signal for example) when the sunshade 44 is positioned at the housed position. Incidentally, the minus ion generator 42, the pollen eliminating ECU 54, the courtesy switch 24 and the limit switch 56 are omitted in Fig. 4B.

When a closing signal is input from the courtesy switch 24 in a state in which the light shielding position signal is input from the limit switch 56, the pollen eliminating ECU 54 operates the minus ion generator 42 and causes the charging unit 46 to charge the sunshade 44. The pollen eliminating ECU 54 maintains the operation state of the minus ion generator 42 for the same predetermined period as that of the first embodiment. On the other hand, the pollen eliminating ECU 54 does not cause the charging unit 46 to switch the sunshade 44 into the de-electrified state until the housed position signal is inputted from the limit switch 56. If the housed position signal is inputted, the pollen eliminating ECU 54 causes the charging unit 46 to bring the sunshade 44 into the de-electrified state. The pollen eliminating ECU 54 not only operates the air cleaning apparatus automatically after the door opening 28 is closed but also operates the minus ion generator 42 and causes the charging unit 46 to charge the sunshade 44 on the basis of a detection of the manual operation of the pollen eliminating switch provided on an operation panel of the air conditioning system. In this case, the pollen eliminating ECU 54 can be configured such that the operation of the minus ion generator 42 is stopped manually, and the sunshade 44 is de-electrified when it has moved to the housed position.

Next, the operation of the third embodiment will be described.

In the automobile 12 to which the pollen eliminating apparatus 40 having the above-described structure is applied, when the door opening 28 is closed with the door 26 in a state in which the sunshade 44 is positioned at the light shielding position, a closing signal is inputted from the courtesy switch 24 to the pollen eliminating ECU 54. The pollen eliminating ECU 54 to which the light shielding position signal and the closing signal are inputted operates the minus ion generator 42 for the predetermined period, and causes the charging unit 46 to positively charge the sunshade 44.

At this time, pollen P in the passenger compartment is negatively charged, and the negatively charged pollen P is attracted to the positively charged sunshade 44 by electrostatic force. That is, the pollen P in the passenger compartment is captured by the sunshade 44. When the sunshade 44 moves to the housed position, the housed position signal is inputted to the pollen eliminating ECU 54 and the charging unit 46 switches the sunshade 44 to the de-electrified state. When the sunshade 44 is de-electrified, the pollen P which has been attracted to the sunshade 44 is separated therefrom (peels off and naturally drops) and collected in the sunshade housing 52.

Thus, the pollen eliminating apparatus 40 electrostatically captures pollen P which is floating or scattered in the passenger compartment by the minus ion generator 42 and the sunshade 44 which is charged by the charging unit 46. Dust can be moved and captured in the passenger compartment without forcibly generating an air flow. Therefore, in the pollen eliminating apparatus 40, it is unnecessary to cause all of the air in the passenger compartment to pass through a filter (pollen eliminating filter 18 or other pollen eliminating filter incorporated in the conventional air conditioning system), and it is possible to reduce the amount of pollen in the passenger compartment swiftly.

Further, the pollen eliminating apparatus 40 enables intensively capturing pollen by charging and attracting the pollen in a necessary region, such as near the face of a passenger where the passenger is prone to suffer if pollen P exists, and effectively reducing the pollen P. Minus ions in the air are considered to have a function of reducing fatigue or stress of a passenger, and therefore there is no problem even if minus ions are emitted toward the passenger. Further, since it is unnecessary to generate an air flow as described above, the pollen P can be captured extremely quietly.

The pollen eliminating apparatus 40 is provided independently from the air conditioning system of the automobile 12. Thus, the pollen eliminating apparatus 40 can be operated at a desired timing, and there is no need to wait until the engine water temperature rises as in a conventionally air conditioning system having a pollen eliminating filter. In the third embodiment, the pollen eliminating apparatus 40 can operate the minus ion generator 42 and the charging unit 46 immediately after the door opening 28 is closed (or at the same time), and can remove the pollen P within a short time after a driver or passenger gets into the automobile. The air cleaning apparatus is reliably and swiftly operated after the door opening 28 is closed since the pollen eliminating ECU 54 automatically activates the air cleaning apparatus 14.

As described above, according to the pollen eliminating apparatus 40 of the third embodiment, pollen P existing in the passenger compartment of the automobile 12 can reliably be eliminated within a short time.

In the pollen eliminating apparatus 40, the sunshade 44 can be positioned at the housed position where the sunshade 44 is accommodated in the sunshade housing 52. The pollen P is collected by de-electrifying the sunshade 44 positioned in the housed position. Thus, it is possible to prevent the pollen P from floating or being scattered again in the passenger compartment. The pollen on the surface of the sunshade 44 is reliably removed, thereby enabling new pollen P to be captured reliably. Pollen P will be further reliably collected if a pollen retaining means which retains the collected pollen P and makes it easy to dispose of the pollen P is provided in the sunshade housing 52, or if the suction unit 14B of the air cleaning apparatus 14 of the first or second embodiment is brought into communication with the sunshade housing 52.

Further, for example, a driving unit which moves the sunshade 44 between the light shielding position and the housed position can be provided so that the sunshade 44 is automatically moved to the light shielding position when a signal indicating opening of the door opening 28 is inputted. In this case, the minus ion generator 42 and the charging unit 46 can be operated immediately after the door opening 28 is closed, and the pollen P can be eliminated more reliably and swiftly. At that time, the pollen eliminating ECU 54 may automatically move the sunshade 44 to the housed position at the time when the operation of the minus ion generator 42 is stopped.

Although the sunshade 44 is used as a dust attracting member in the third embodiment, the invention is not limited thereto. Other members or parts constituting the automobile 12 or dedicated components of the pollen eliminating apparatus 40 may be the dust attracting member.

The invention is not limited to the structure in which the sunshade 44 or other dust attracting member can be positioned at a position (light shielding position) which is exposed in the passenger compartment and a position (housed position) accommodated in the housing unit. It may be fixed in the passenger compartment, or detachably attached in the passenger compartment. In a structure in which the sunshade 44 is used as the dust attracting member, the sunshade 44 is not limited to a configuration in which it shields light inside the side window 50 in the back seat. A sunshade of a sunroof can also be used. Further, in the invention, the layout of the minus ion generator 42 is not limited to that described above.

### Fourth Embodiment

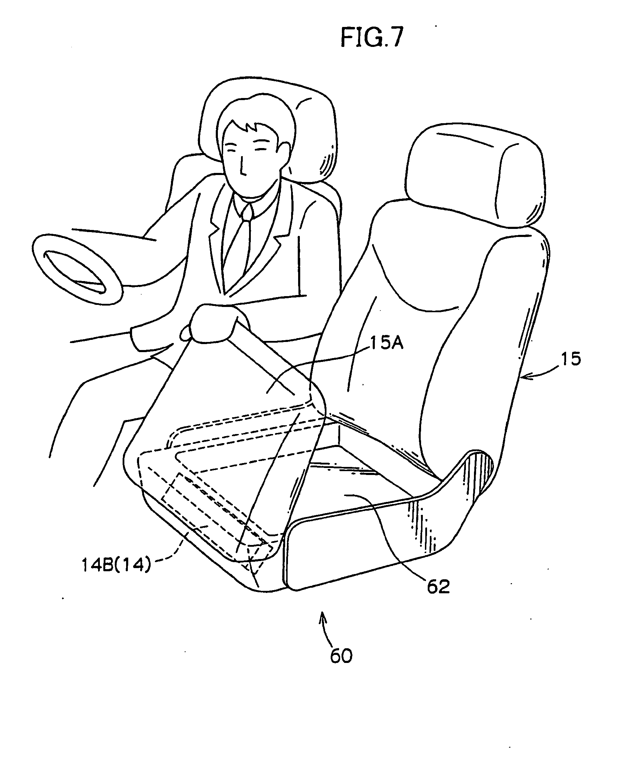

A pollen eliminating apparatus 60 as a dust reducing apparatus according to a fourth embodiment of the invention will be described based on Fig. 7.

The pollen eliminating apparatus 60 of the fourth embodiment prevents pollen P, which are attached on articles brought into the passenger compartment by a passenger, from floating or being scattered in the passenger compartment. In this point, the pollen eliminating apparatus 60 has different efficiency from the pollen eliminating apparatuses 10, 30 and 40 which eliminate pollen P in the air and pollen P attached to clothes and body of a passenger.

As shown in Fig. 7, the pollen eliminating apparatus 60 includes a carry-on article box (accommodating space) 62 provided under a seat cushion 15A of a passenger seat 15. The carry-on article(s) (not shown) can be put in the carry-on article box 62 and be covered with the seat cushion 15A, thereby isolated from the passenger compartment, and pollen P attached to the carry-on article is prevented from floating in the passenger compartment.

The pollen eliminating apparatus 60 includes the air cleaning apparatus 14. The suction unit 14B of the air cleaning apparatus 14 suctions air in the carry-on article box 62. The body 14A (not shown) is disposed below the passenger seat 15 as like as the first embodiment. In the fourth embodiment, in addition to the suction unit 14B shown in Fig. 7, the air cleaning apparatus 14 includes another suction unit 14B (not shown) which is suitable for suctioning pollen P on the floor 16 and pollen P which is caught up by the wind from the floor 16.

The air cleaning apparatus 14 is controlled by the pollen eliminating ECU 22 (not shown) as in the first embodiment. The air cleaning apparatus 14 suctions air from the carry-on article box 62, generates an air flow to separate the pollen P from the carry-on article, and captures the separated pollen P by the pollen eliminating filter 18. Thus, in the fourth embodiment, the air cleaning apparatus 14 corresponds to both of separating unit and capture unit.

Next, the operation of the fourth embodiment will be described.

In the automobile 12 having the pollen eliminating apparatus 60 of the above-described structure, when the door opening 28 for the driver's seat is closed with the door 26, a closing signal is inputted from the courtesy switch 24 to the pollen eliminating ECU 22. The pollen eliminating ECU 22 to which the closing signal is inputted operates the fan 20 and the blower 34 for a predetermined period.

During the operation of the air cleaning apparatus 14, the driver puts the carry-on article(s) such as shoes or a bag in the carry-on article box 62 under the passenger seat 15, and the opening of the carry-on article box 62 is closed with the seat cushion 15A. Thus, pollen P attached to the carry-on article is prevented from floating or being scattered directly into the passenger compartment. By the air cleaning apparatus 14 which is operating as described above, the pollen P attached to the carry-on article(s) is reliably and swiftly removed from the carry-on article(s) in the box 62. Therefore, when the carry-on article box 62 is opened again, pollen P in the carry-on article box 62 will not scattered or float in the passenger compartment.

According to the pollen eliminating apparatus 60 of the fourth embodiment, pollen P existing in the passenger compartment of the automobile 12 can reliably be eliminated within a short time. The amount of pollen P in the passenger compartment is reduced, and pollen P floating or scattered in the passenger compartment are prevented from increasing. In addition to the suction unit 14B for the carry-on article box 62, the pollen eliminating apparatus 60 includes another suction unit 14B for the floor 16, thereby exhibiting the same effect (including effect of the flexible operation timing) as that of the pollen eliminating apparatus 10 of the first embodiment.

Although the air cleaning apparatus 14 is configured to be controlled by the pollen eliminating ECU 22 in the fourth embodiment, the invention is not limited thereto. For example, the air cleaning apparatus 14 can be operated only manually.

Further in the fourth embodiment, although the air cleaning apparatus 14 includes the plural suction units 14B, the invention is not limited to this structure. For example, the air cleaning apparatus 14 may not have the suction unit 14B that suctions air in the vicinity of the floor 16. In this case, or in a structure in which a dedicated air cleaning apparatus 14 is provided for the carry-on article box 62, the air cleaning apparatus 14 may be operated after the carry-on article box 62 is covered with the seat cushion 15A (after this covering operation is detected).

Furthermore, the air cleaning apparatus 14 is configured to function as the separating unit in the fourth embodiment, but the invention is not limited thereto. An independent separating unit for separating the pollen P from the carry-on article(s) in the carry-on article box 62 may be provided.

### Fifth Embodiment

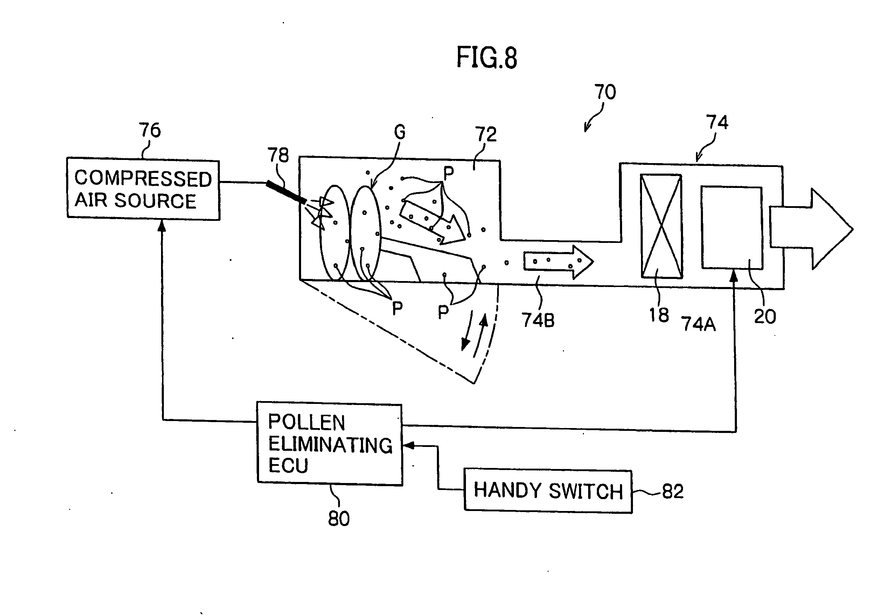

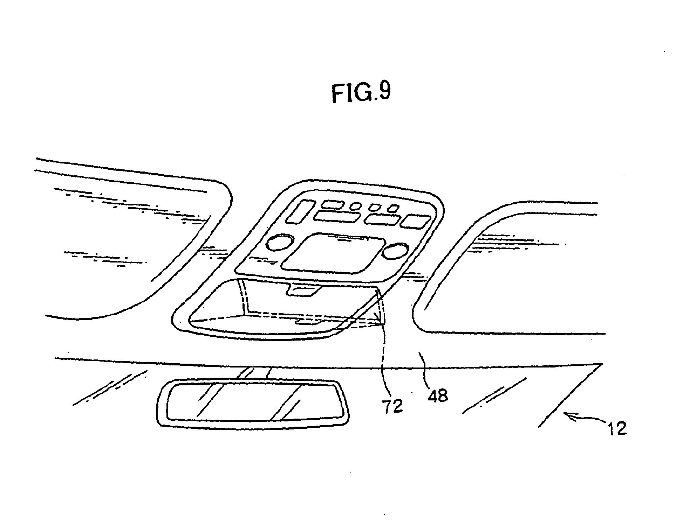

A pollen eliminating apparatus 70 as a dust reducing apparatus of a fifth embodiment of the invention will be described based on Figs. 8 and 9.

The pollen eliminating apparatus 70 of the fifth embodiment prevents pollen P which is attached to carry-on article(s) brought into the passenger compartment by a passenger from floating or being scattered in the passenger compartment. In this point, the pollen eliminating apparatus 70 has the same efficiency as the pollen eliminating apparatus 60 of the fourth embodiment and has different efficiency from the pollen eliminating apparatuses 10,30 and 40.

As shown in Fig. 8, the pollen eliminating apparatus 70 includes a glass case 72 as an accommodating space for accommodating carry-on article(s). The glass case 72 is a case capable of opening/closing for accommodating relatively small carry-on article(s) such as glasses or sunglasses of a passenger. In the fifth embodiment, the glass case 72 is disposed at a central portion of a front end of the roof 48 as shown in Fig. 9.

Referring back to Fig. 8, the pollen eliminating apparatus 70 includes an air cleaning apparatus 74 as a capture unit. The air cleaning apparatus 74 includes the pollen eliminating filter 18 and the fan 20 in its body 74A. Similarly to the air cleaning apparatus 14, the air cleaning apparatus 74 suctions air from a suction unit 74B by operating the fan 20, such that the air passes through the pollen eliminating filter 18 and is discharged. The suction unit 74B of the air cleaning apparatus 74 is in communication with a glass case 72.

According to this structure, the air cleaning apparatus 74 suctions pollen P in the air inside the glass case 72 through the suction unit 74B so that the pollen is attached to the pollen eliminating filter 18, and sends the air from which the pollen P is eliminated into the passenger compartment as clean air. Although it is not illustrated in the drawing, the air cleaning apparatus 74 is disposed at substantially central portion of the roof 48, and the air cleaning apparatus 74 is used only for eliminating pollen P attached to the carry-on article (incidentally, the air cleaning apparatus 74 may be in communication with another accommodating space other than the glass case 72).

The pollen eliminating apparatus 70 includes an air nozzle 78 connected to a compressed air source 76. The air nozzle 78 ejects the compressed air into the glass case 72, and pollen P attached to the carry-on article (glasses G in Fig. 8) in the glass case 72 are separated from the carry-on article. The compressed air source 76 may be a compressor, or an air tank and an on/off valve provided between the compressor and the air nozzle 78. The compressed air source 76 and the air nozzle 78 correspond to the separating unit of the invention.

The air cleaning apparatus 74 and the compressed air source 76 are controlled by a pollen eliminating ECU 80. When a signal indicating that a carry-on article such as the glasses G is accommodated in the glass case 72 is inputted to the pollen eliminating ECU 80 from an optical switch (not shown) or the like, or when a signal indicating that the glass case 72 is opened and then closed is inputted from the limit switch or the like, the pollen eliminating ECU 80 operates the compressed air source 76 and the fan 20 for a pre-set time period. The operation of the compressed air source is, for example, actuation of the compressor, and supply of compressed air to the air nozzle 78 by the opening operation of a valve provided downstream of the air tank.

In the fifth embodiment, the pollen eliminating ECU 80 is electrically connected to a passenger's handy switch 82. When the ON signal is input from the handy switch 82, the compressed air source 76 and the fan 20 are also operated for the pre-set time period.

Next, the operation of the fifth embodiment will be described.

According to the automobile 12 having the pollen eliminating apparatus 70, if a passenger accommodates a carry-on article such as the glasses G into the glass case 72, a signal indicating this fact is inputted to the pollen eliminating ECU 80. Then, the pollen eliminating ECU 80 operates the compressed air source 76 and the fan 20 of the air cleaning apparatus 74.

As a result, compressed air is ejected from the air nozzle 78 toward the glasses G, and pollen P attached to the glasses G will scatter in the glass case 72. The scattered pollen P is suctioned into the air cleaning apparatus 74 together with air in the glass case 72. The pollen P is suctioned by the pollen eliminating filter 18 when the air flow passes through it, and clean air is discharged from the air cleaning apparatus 74.

If a count of a timer incorporated in the pollen eliminating ECU 80 reaches the pre-set time, the pollen eliminating apparatus 30 stops the operation of the compressed air source 76 and the fan 20. The fan 20 may be set to be stopped after the compressed air source 76 is stopped.

By accommodating the carry-on article in the glass case 72, pollen P attached to the carry-on article is prevented from floating or being scattered directly in the passenger compartment. The pollen P attached to the carry-on article is reliably and swiftly eliminated from the carry-on article box 62 by the air cleaning apparatus 14. Thus, pollen P in the carry-on article box 62 is prevented from floating or being scattered in the passenger compartment when the carry-on article box 62 is opened once again. Further, since compressed air ejecting from the air nozzle 78 forcibly separate the pollen P attached to the carry-on article, pollen P is further eliminated, and the amount of pollen existing in the glass case 72 is further reduced. Providing the glass case 72 for accommodating the carry-on article enables a structure such that pollen P attached to the carry-on article can forcibly separated using the compressed air as described above.

According to the pollen eliminating apparatus 70 of the fifth embodiment, pollen P existing in the passenger compartment of the automobile 12 can reliably be eliminated within a short time. That is, the amount of pollen P in the passenger compartment is reduced, and pollen P floating or scattered in the passenger compartment is effectively prevented from increasing.

Although the glass case 72 is provided therein with the air nozzle 78 constituting the separating unit in the fifth embodiment, the invention is not limited to this structure. The glass case 72 may not be provided with the air nozzle 78, and another separating unit which vibrates the carry-on article to separate the pollen P can be provided instead of the air nozzle 78. The former structure is the same as that of the pollen eliminating apparatus 60 of the fourth embodiment except that the air cleaning apparatus 74 is used only for eliminating pollen of a carry-on article. The controlling operation of the pollen eliminating ECU 80 is not limited to as that of the fifth embodiment. For example, a trigger signal which activates the compressed air source 76 and the fan 20 may be only one of a signal of the optical sensor or limit switch (as described above), and a signal of the handy switch 82. The stop conditions of the compressed air source 76 and the fan 20 are not limited to the pre-set time. For example, the stop conditions may be that a signal indicating that the amount (or concentration) of pollen in the glass case 72 becomes equal to or smaller than a pre-set value is outputted from the pollen sensor, and that an OFF signal is inputted from the handy switch 82 or the like. Although in the fifth embodiment the air cleaning apparatus 74 is provided as the capture unit, the invention is not limited to this structure. For example, the minus ion generator and the dust attracting member as shown in the third embodiment may constitute the capture unit. *Sixth Embodiment*

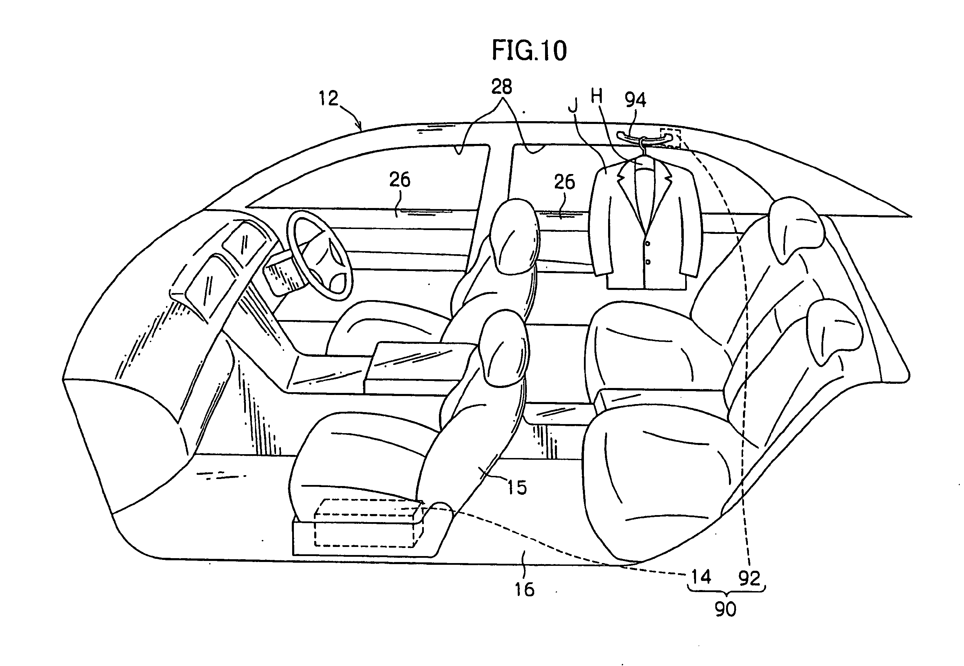

A pollen eliminating apparatus 90 as a dust reducing apparatus of a sixth embodiment of the invention will be described based on Fig. 10.

The pollen eliminating apparatus 90 of the sixth embodiment prevents pollen P attached to the carry-on article brought into the passenger compartment by a passenger from floating or being scattered in the passenger compartment. In this point, the pollen eliminating apparatus 90 has the same efficiency as the pollen eliminating apparatuses 60 and 70 of the fourth and fifth embodiments, but is different in the structure that does not have the accommodating space for accommodating carry-on articles.

As shown in Fig. 10, the pollen eliminating apparatus 90 includes the air cleaning apparatus 14 as a capture unit. The suction unit 14B (at least one of the suction units 14B) of the air cleaning apparatus 14 has its opening opened toward the back seat, and suctions air in the passenger compartment from a lower position of the back seat. The air cleaning apparatus 14 is controlled by the pollen eliminating ECU 22 (not shown) in the same manner as that of the first embodiment.

The pollen eliminating apparatus 90 includes a vibrator 92 as a separating unit which separates pollen P attached to the carry-on article by vibrating the carry-on article. In the sixth embodiment, the vibrator 92 is provided on a connection portion between the vehicle body and an assist grip 94 for the back seat. The vibrator vibrates the assist grip 94 by for example converting rotation of a motor into a reciprocating motion by unit of a crank mechanism, or by rotating an eccentric shaft by the motor, or by rotating the eccentric shaft by the motor. The vibrator 92 may comprise a piezoelectric element instead of the motor.

The vibrator 92 is configured to be activated when a handy switch is turned ON by the passenger, and to be stopped after a predetermined time has elapsed from the time when the handy switch is turned OFF by the passenger. The vibrator 92 may be controlled by the pollen eliminating ECU 22 (through pollen eliminating ECU 22), or may be operated independently from the air cleaning apparatus 14.

Next, the operation of the sixth embodiment will be described.

According to the automobile 12 having the pollen eliminating apparatus 90 of the above structure, when the door opening 28 is closed with the door 26, a closing signal is inputted from the courtesy switch 24 to the pollen eliminating ECU 22. The pollen eliminating ECU 22 to which the closing signal is inputted operates the fan 20 and the blower 34 for the predetermined period.

During the operation of the air cleaning apparatus 14, the passenger for example, hangs a hanger H on which a jacket J is hung on the assist grip 94, and turns the handy switch ON. Then, the vibrator 92 is operated to vibrate the assist grip 94, and the vibration is transmitted to the jacket J through the hanger H, thereby pollen P attached to the jacket J is shaken off from the jacket J (separated). At that time, since the air cleaning apparatus 14 is operated, pollen P which were shaken off from the jacket J are suctioned into the air cleaning apparatus 14, so that the pollen P can reliably be and swiftly eliminated from the passenger compartment.

According to the pollen eliminating apparatus 90 of the sixth embodiment, pollen P existing in the passenger compartment of the automobile 12 can reliably be eliminated within a short time. That is, the amount of pollen P in the passenger compartment is reduced, and pollen P is prevented from floating or being scattered in the passenger compartment. According to the pollen eliminating apparatus 90, the air cleaning apparatus 14 eliminates not only pollen P shaken off from the jacket J but also pollen P floating or being scattered in the passenger compartment (pollen P which is entered into the passenger compartment together with the passenger), thereby exhibiting the same effect as that of the pollen eliminating apparatus 10 of the first embodiment.

Although the vibrator 92 is configured to be operated when the passenger turns ON the handy switch in the sixth embodiment, the invention is not limited to this structure. The switch of the vibrator 92 can be incorporated in the assist grip 94 for example, so that the switch can automatically be turned ON by the weight of the hanger H on which a jacket J is hung, and the vibrator 92 may automatically be operated. It is more effective if the air cleaning apparatus 14 (especially the suction unit 14B thereof) is disposed below the assist grip 94, such that a distance through which pollen P shaken off from the jacket J move in the passenger compartment can be reduced.

In each of the embodiments, pollen P can be eliminated from the passenger compartment as a dust. However, not only pollen, but also various dusts which are floating or scattered in the air or attached to a passenger (or passenger's clothes) or a carry-on article can be prevented from entering into the passenger compartment by using the apparatus according to any of the embodiments. In the structure using the air cleaning apparatus 14 or 74 the eliminating ability of the dust can be enhanced if the pollen eliminating filter 18 is appropriately modified or added in accordance with the type of dust to be eliminated.

## Claims

1. A vehicle **(12)** comprising a dust reducing apparatus **(10; 30)** for reducing an amount of dust in a passenger compartment of the vehicle **(12),** wherein said dust reducing apparatus **(10; 30)** is provided independently from an air conditioning system of the vehicle and comprises
an air cleaning apparatus **(14)** which includes a filter **(18)** and which is provided in the passenger compartment to suck air in the passenger compartment **(14)** from a lower position thereof and allows the air to pass through the filter **(18)**, thereby eliminating dust in the air, **characterized in that**:
the dust reducing apparatus further comprises a control unit **(22)** which operates the air cleaning apparatus **(14)** for a predetermined period after a door opening of the vehicle **(12)** is closed.

2. The vehicle according to claim 1, wherein the air cleaning apparatus **(14)** is disposed in a seat **(15)** or below the seat **(15)** in the passenger compartment.

3. The vehicle according to claim 1 or 2, the dust reducing apparatus **(30)** further comprising a blower **(34)**, wherein
the air cleaning apparatus **(14)** is disposed in a lower portion of a seat **(15)** or at a lower position in the passenger compartment, the blower **(34)** is disposed at an upper portion of the seat **(15)** or above the seat **(15)** in the passenger compartment, and the blower **(34)** generates an air flow flowing toward the air cleaning apparatus **(14).**

4. The vehicle according to claim 3, wherein the air cleaning apparatus **(14)** comprises at least one suction unit **(14B)** for suctioning air, and at least one of the suction units **(14b)** is disposed downstream of the air flow generated by the blower **(34)** and at a position where the air flow is received.

5. The vehicle according to one of claims 1 to 4, wherein the air cleaning apparatus **(14)** comprises at least one suction unit **(14B)** for suctioning air, at least one of the suction units **(14B)** is disposed at a lower portion of the seat **(15)** or at a lower position in the passenger compartment.

6. A vehicle **(12)** comprising a dust reducing apparatus **(40)** for reducing an amount of dust in a passenger compartment of the vehicle **(12),** wherein the dust reducing apparatus **(40)** is provided independently from an air conditioning system of the vehicle,
**characterized in that**
the dust reducing apparatus **(40)** comprises:
an ion generator **(42)** for generating ions for negatively or positively charging dust contained in the air of the passenger compartment by the ions, and
a dust attracting member **(44)** which is charged with opposite polarity as that of the dust so that the dust is attached to the member,
wherein the ion generator (42) and the dust attracting member (44) are provided in the passenger compartment to charge and attract the dust in the passenger compartment, and
a control unit (54) which operates the ion generator (42) and the dust attracting member (44) for a predetermined period after a door opening of the vehicle (12) is closed.

7. The vehicle according to claim 6, wherein the dust attracting member **(44)** can be selectively positioned at a dust attaching position in the passenger compartment where the dust can attach to the member, and at a housed position where the dust attracting member is housed in a housing unit **(52)** provided in the passenger compartment.

8. The vehicle according to claim 6 or 7, the dust reducing apparatus **(40)** further comprising a charging unit (46) which charges the dust attracting member **(44)** with opposite polarity as that of the dust.

9. A vehicle **(12)** comprising a dust reducing apparatus **(60; 70; 90)** for reducing an amount of dust in a passenger compartment of the vehicle **(12)**, wherein said dust reducing apparatus **(60; 70; 90)** is provided independently from an air conditioning system of the vehicle, and comprises:
a separating unit **(14B; 76, 78; 92)** for separating dust, which is attached to a carry-on article carried into the passenger compartment, from the carry-on article; and
a capture unit **(18; 74; 14)** for capturing the separated dust, **characterized in that**
the separating unit (14B; 76, 78;92) and capture unit (18; 74; 14) are provided in the passenger compartement to separate and capture the dust in the passenger compartement, and
the dust reducing apparatus (60; 70; 90) further comprises a control unit (22; 80) which operates the separating unit (14B; 76, 78; 92) and capture unit (18; 74; 14) for a predetermined period after a door opening of the vehicle is closed.

10. The vehicle according to claim **9**, the dust reducing apparatus **(70)** further comprising an accommodating space **(72)** which is provided in communication with the capture unit **(74)** and which accommodates the carry-on article therein,
wherein the separating unit **(76, 78)** separates the dust from the carry-on article accommodated in the accommodating space **(72).**

11. The vehicle according to claim **9,** wherein the separating unit **(76, 78)** includes an air nozzle **(78)** which ejects compressed air into the accommodating space **(72).**

12. The vehicle according to one of claims **9** to **11,** wherein the separating unit (92) includes a vibrator which vibrates the carry-on article.

13. The vehicle according to one of claims **9** to **12,** wherein the capture unit **(14)** includes at least one suction unit for suctioning air and capturing dust, and at least one of the suction units is in communication with the accommodating space **(62).**

## Patentansprüche

1. Fahrzeug (12) mit einer Staubreduzierungsvorrichtung (10; 30) zum Reduzieren einer Staubmenge im Fahrgastraum des Fahrzeuges (12), wobei die Staubreduzierungsvorrichtung (10; 30) unabhängig von einer Klimaanlage des Fahrzeuges bereitgestellt ist und
eine Luftreinigungsvorrichtung (14), die einen Filter (18) beinhaltet und die im Fahrgastraum angeordnet ist, um Luft im Fahrgastraum (14) von einer tieferen Position desselben anzusaugen und durch den Filter (18) strömen lässt, um **dadurch** Staub aus der Luft zu entfernen, umfasst,
**dadurch gekennzeichnet, dass**
die Staubreduzierungsvorrichtung des Weiteren eine Steuereinheit (22) umfasst, die die Luftreinigungsvorrichtung (14) für eine vorbestimmte Dauer nach dem Schließen einer Türöffnung des Fahrzeuges (12), betreibt.

2. Fahrzeug nach Anspruch 1, wobei die Luftreinigungsvorrichtung (14) in einem Sitz (15) oder unter dem Sitz (15) im Fahrgastraum angeordnet ist.

3. Fahrzeug nach Anspruch 1 oder 2, wobei die Staubreduzierungsvorrichtung (30) des Weiteren ein Gebläse (34) umfasst,
wobei die Luftreinigungsvorrichtung (14) in einem tieferen Abschnitt eines Sitzes (15) oder an einer tieferen Position im Fahrgastraum angeordnet ist, das Gebläse (34) an einem höheren Abschnitt des Sitzes (15) oder oberhalb des Sitzes (15) im Fahrgastraum angeordnet ist, und das Gebläse (34) einen in Richtung der Luftreinigungsvorrichtung (14) strömenden Luftstrom erzeugt.

4. Fahrzeug nach Anspruch 3, wobei die Luftreinigungsvorrichtung (14) mindestens eine Ansaugeinheit (14B) zum Ansaugen von Luft umfasst, und mindestens eine der Ansaugeinheiten (14b) stromabwärts des von dem Gebläse (34) erzeugten Luftstromes und an einer Position, an der der Luftstrom aufgenommen wird, angeordnet ist.

5. Fahrzeug nach einem der Ansprüche 1 bis 4, wobei die Luftreinigungsvorrichtung (14) mindestens eine Ansaugeinheit (14B) zum Ansaugen von Luft umfasst, und mindestens eine der Ansaugeinheiten (14B) an einem tieferen Abschnitt des Sitzes (15) oder an einer tieferen Position im Fahrgastraum angeordnet ist.

6. Fahrzeug (12) mit einer Staubreduzierungsvorrichtung (40) zum Reduzieren einer Staubmenge im Fahrgastraum des Fahrzeuges (12), wobei die Staubreduzierungsvorrichtung (40) unabhängig von einer Klimaanlage des Fahrzeuges bereitgestellt ist, **dadurch gekennzeichnet dass,**
die Staubreduzierungsvorrichtung (40) umfasst:
einen Ionenerzeuger (42) zum Erzeugen von Ionen zum negativen oder positiven Aufladen von in der Luft des Fahrgastraumes enthaltenem Staub mittels der Ionen und
ein Staubanziehungsteil (44), das mit der entgegen gesetzten Polarität wie der Staub so aufgeladen ist, dass der Staub von dem Teil angezogen wird,
wobei der Ionenerzeuger (42) und das Staubanziehungsteil (44) im Fahrgastraum angeordnet sind, um den Staub im Fahrgastraum aufzuladen und anzuziehen, und
eine Steuereinheit (54), die den Ionenerzeuger (42) und das Staubanziehungsteil (44) für eine vorbestimmte Dauer nach dem Schließen einer Türöffnung des Fahrzeuges (12), betreibt.

7. Fahrzeug nach Anspruch 6, wobei das Staubanziehungsteil (44) wahlweise in einer Staubanlagerungsposition im Fahrgastraum, an der sich der Staub an dem Teil anlagern kann, und in einer Aufnahmeposition, in der das Staubanlagerungsmittel in einem Gehäuse (52) aufgenommen ist, das im Fahrgastraum vorgesehen ist, angeordnet werden kann.

8. Fahrzeug nach Anspruch 6 oder 7, wobei die Staubreduzierungsvorrichtung (40) des Weiteren eine Aufladeeinheit (46) umfasst, die das Staubanziehungsteil (44) mit der entgegen gesetzten Polarität wie der Staub auflädt.

9. Fahrzeug (12) mit einer Staubreduzierungsvorrichtung (60; 70; 90) zum Reduzieren einer Staubmenge im Fahrgastraum des Fahrzeuges (12), wobei die Staubreduzierungsvorrichtung (60; 70; 90) unabhängig von einer Klimaanlage des Fahrzeuges (12) bereitgestellt ist und umfasst:
eine Trenneinheit (14B; 76, 78; 92) zum Trennen von Staub, der an einem in den Fahrgastraum mitgenommenen Mitnahmeartikel anhaftet, von dem Mitnahmeartikel, und
eine Auffangeinheit (18; 74; 14) zum Auffangen des abgetrennten Staubes, **dadurch gekennzeichnet, dass**
die Trenneinheit (14B; 76, 78; 92) und die Auffangeinheit (18; 74; 14) im Fahrgastraum angeordnet sind, um den Staub im Fahrgastraum abzutrennen und aufzufangen und
die Staubreduzierungsvorrichtung (60; 70; 90) eine Steuereinheit (22; 80) umfasst, die die Trenneinheit (14B; 76, 78; 92) und die Auffangeinheit (18; 74; 14) für eine vorbestimmte Dauer nach dem schließen einer Türöffnung des Fahrzeuges betreibt.

10. Fahrzeug nach Anspruch 9, wobei die Staubreduzierungsvorrichtung (70) einen mit der Auffangeinheit (74) in Verbindung stehenden Aufnahmeraum (72) umfasst, der den Mitnahmeartikel aufnimmt,
wobei die Trenneinheit (76, 78) den Staub von dem im Aufnahmeraum (72) aufgenommenen Mitnahmeartikel trennt.

11. Fahrzeug nach Anspruch 9, wobei die Trenneinheit (76, 78) eine Luftdüse (78) umfasst, die Druckluft in den Aufnahmeraum (72) ausstößt.

12. Fahrzeug nach einem der Ansprüche 9 bis 11, wobei die Trenneinheit (92) eine Vibrationsvorrichtung umfasst, die den Mitnahmeartikel vibrieren lässt.

13. Fahrzeug nach einem der Ansprüche 9 bis 12, wobei die Auffangeinheit (14) mindestens eine Ansaugeinheit zum Ansaugen von Luft und Auffangen von Staub umfasst, und mindestens eine der Ansaugeinheiten mit dem Aufnahmeraum (62) in Verbindung steht.

## Revendications

1. Véhicule (12) comprenant un dispositif de réduction de poussière (10; 30) pour réduire une quantité de poussière dans un compartiment passager du véhicule (12), dans lequel ledit dispositif de réduction de poussière (10; 30) est placé indépendamment d'un système de climatisation du véhicule et comprend
un dispositif de nettoyage d'air (14) qui inclut un filtre (18), et qui est placé dans le compartiment passager de façon à aspirer l'air dans le compartiment passager (14) depuis une position inférieure de celui-ci et permettre à l'air de passer à travers le filtre (18), éliminant ainsi la poussière dans l'air, **caractérisé en ce que :**
le dispositif de réduction de poussière comprend une unité de commande (22) qui fait fonctionner le dispositif de nettoyage d'air (14) pendant une période prédéterminée après qu'une ouverture de portière du véhicule (12) a été fermée.

2. Véhicule selon la revendication 1, dans lequel le dispositif de nettoyage d'air (14) est disposé dans un siège (15) ou sous le siège (15) dans le compartiment passager.

3. Véhicule selon la revendication 1 ou 2, le dispositif de réduction de poussière (30) comprenant en outre un souffleur (34), dans lequel
le dispositif de nettoyage d'air (14) est disposé dans une partie inférieure d'un siège (15) ou dans une position inférieure dans le compartiment passager, le souffleur (34) est disposé au niveau d'une partie supérieure du siège (15) ou au-dessus du siège dans le compartiment passager, et le souffleur (34) génère un flux d'air vers le dispositif de nettoyage d'air (14).

4. Véhicule selon la revendication 3, dans lequel le dispositif de nettoyage d'air (14) comprend au moins une unité d'aspiration (14B) pour aspirer de l'air, et au moins l'une des unités d'aspiration (14b) est disposée en aval du flux d'air généré parle souffleur (34) et dans une position ou le flux d'air est reçu.

5. Véhicule selon l'une des revendications 1 à 4, dans lequel le dispositif de nettoyage d'air (14) comprend au moins une unité d'aspiration (14B) pour aspirer de l'air, au moins l'une des unités d'aspiration (14B) est disposée en une partie inférieure du siège (15) ou dans une position inférieure dans le compartiment passager.

6. Véhicule (12) comprenant un dispositif de réduction de poussière (40) pour réduire une quantité de poussière dans un compartiment passager du véhicule (12), dans lequel le dispositif de réduction de poussière (40) est placé indépendamment d'un système de climatisation du véhicule, **caractérisé en ce que**
le dispositif de réduction de poussière (40) comprend :
un générateur d'ions (42) pour générer des ions pour charger négativement ou positivement la poussière contenue dans l'air du compartiment passager par les ions, et
un élément d'attraction de poussière (44) qui est chargé avec une polarité opposée à celle de la poussière de telle manière que la poussière est fixée à l'élément,
dans lequel le générateur d'ions (42) et l'élément d'attraction de poussière (44) sont placés dans le compartiment passager pour charger et attirer la poussière dans le compartiment passager, et
une unité de commande (54) qui fait fonctionner le générateur d'ions (42) et l'élément d'attraction de poussière (44) pendant une période prédéterminée après qu'une ouverture de portière du véhicule (12) a été fermée.

7. Véhicule selon la revendication 6, dans lequel l'élément d'attraction de poussière (44) peut être positionné sélectivement dans une position de fixation de poussière dans le compartiment passager où la poussière peut se fixer sur l'élément, et dans une position logée où l'élément d'attraction de poussière est logé dans une unité de logement (52) placée dans le compartiment passager.

8. Véhicule selon la revendication 6 ou 7, le dispositif de réduction de poussière (40) comprenant en outre une unité de charge (46) qui charge l'élément d'attraction de poussière (44) avec une polarité opposée à celle de la poussière.

9. Véhicule (12) comprenant un dispositif de réduction de poussière (60; 70; 90) pour réduire une quantité de poussière dans un compartiment passager du véhicule (12), dans lequel ledit dispositif de réduction de poussière (60; 70; 90) est placé indépendamment d'un système de climatisation du véhicule et comprend :
une unité de séparation (14B; 76, 78; 92) pour séparer la poussière, qui est fixée sur un élément mobile supporté dans le compartiment passager, de l'élément mobile ; et
une unité de capture (18; 74; 14) pour capturer la poussière séparée, **caractérisé en ce que**
l'unité de séparation (14B; 76, 78; 92) et l'unité de capture (18; 74; 14) sont placées dans le compartiment passager pour séparer et capturer la poussière dans le compartiment passager, et
le dispositif de réduction de poussière (60; 70; 90) comprend en outre une unité de commande (22; 80) qui fait fonctionner l'unité de séparation (14B; 76, 78; 92) et l'unité de capture (18; 74; 14) pendant une période prédéterminée après qu'une ouverture de portière du véhicule (12) a été fermée.

10. Véhicule selon la revendication 9, le dispositif de réduction de poussière (70) comprenant en outre un espace de logement (72) qui est placé en communication avec l'unité de capture (74) et dans lequel est logé l'élément mobile,
dans lequel l'unité de séparation (76, 78) sépare la poussière de l'élément mobile logé dans l'espace de logement (72).

11. Véhicule selon la revendication 9, dans lequel l'unité de séparation (76, 78) inclut une buse d'air (78) qui éjecte de l'air comprimé dans l'espace de logement (72).

12. Véhicule selon l'une des revendications 9 à 11, dans lequel l'unité de séparation (92) inclut un vibreur qui fait vibrer l'élément mobile.

13. Véhicule selon l'une des revendications 9 à 12, dans lequel l'unité de capture (14) inclut au moins une unité d'aspiration pour aspirer de l'air et capturer la poussière, et au moins l'une des unités d'aspiration est en communication avec l'espace de logement.
